# FASCICULE DE BREVET EUROPEEN

(11) **EP 3 744 606 B1**
(45) Date de publication et mention de la délivrance du brevet: **11.08.2021**
(21) Numéro de dépôt: 20176861.1
(22) Date de dépôt: 27.05.2020
(51) Int. Cl.: B61D 27/00, B60H 1/00

(54) **DISPOSITIF DE VENTILATION POUR VÉHICULE COMPORTANT AU MOINS UN ÉLÉMENT D'ABSORPTION ACOUSTIQUE ET VÉHICULE ASSOCIÉ**
BELÜFTUNGSVORRICHTUNG FÜR FAHRZEUG, DIE MINDESTENS EIN SCHALLABSORPTIONSELEMENT UMFASST, UND ENTSPRECHENDES FAHRZEUG
VENTILATION DEVICE FOR A VEHICLE COMPRISING AT LEAST ONE ACOUSTIC ABSORPTION ELEMENT AND ASSOCIATED VEHICLE

(30) Priorité: 27.05.2019 FR 1905589
(43) Date de publication de la demande: 02.12.2020
(73) Titulaire: ALSTOM Transport Technologies, 93400 Saint-Ouen (FR)
(72) Inventeur: BISTAGNINO, Andrea, 93482 SAINT OUEN (FR); ARCAS CASTILLO, Kevin, 08024 BARCELONA (ES); MAGRANS FONTRODONA, Francisco Javier, 08024 BARCELONA (ES)
(74) Mandataire: Lavoix

(56) Documents cités:
- EP-A1- 2 476 599
- EP-A1- 2 957 476
- EP-A2- 0 829 409
- EP-A2- 2 574 794
- DE-A1- 10 118 219
- JP-A- H 082 410
- JP-A- S57 114 086
- JP-U- S5 519 048

## Description

La présente invention concerne un dispositif de ventilation pour véhicule ferroviaire, du type comportant un système de génération d'un flux d'air et au moins un conduit destiné à recevoir le flux d'air, le conduit étant allongé selon une direction longitudinale d'extension et comprenant une paroi de séparation, sensiblement parallèle à la direction longitudinale, pour séparer l'intérieur du conduit d'un compartiment voyageur du véhicule, ladite paroi de séparation présentant au moins deux ouvertures traversantes, le dispositif de ventilation pour véhicule comportant au moins un élément d'absorption acoustique disposé à la périphérie des ouvertures traversantes.

Des dispositifs de ventilation du type précité sont connus. Ils sont notamment utilisés pour assurer un bon échange d'air entre l'intérieur et l'extérieur du véhicule ferroviaire et une bonne circulation d'air dans le compartiment voyageur.

Ces dispositifs de ventilation comprennent généralement un système de chauffage, ventilation et climatisation (mieux connu sous la désignation « système CVC » ou « système HVAC », de l'anglais « heating, ventilation, and air conditioning »), disposé en amont du conduit suivant le sens de circulation du flux d'air. Ce système CVC est générateur de bruit, et ce bruit est susceptible de se propager jusqu'au compartiment voyageur via le conduit, provoquant une gêne des voyageurs. Afin de prévenir une telle gêne, il est connu d'équiper les dispositifs de ventilation connus d'un silencieux interposé fluidiquement entre le conduit et le système CVC. Le document JP S57 114086 A décrit un exemple de dispositif de ventilation.

Cependant, ces dispositifs de ventilation connus ne donnent pas entière satisfaction. En effet, le silencieux présente un coût important et occupe un volume d'espace élevé.

Un but de l'invention est de réduire le bruit en provenance du système CVC.

A ce but, l'invention a pour objet un dispositif de ventilation du typé précité, tel que le conduit comprend une paroi de doublage disposée entre les deux ouvertures traversantes et s'étendant transversalement depuis un élément d'absorption acoustique bordant une desdites ouvertures traversantes jusqu'à un élément d'absorption acoustique bordant la deuxième ouverture traversante, et longitudinalement sur toute la longueur du conduit.

Selon des modes de réalisation particuliers de l'invention, le dispositif de ventilation présente en outre l'une ou plusieurs des caractéristiques suivantes, prise(s) isolément ou suivant toute(s) combinaison(s) possible(s) :
- la distance maximale entre le ou chaque élément d'absorption et un bord de l'ouverture traversante correspondante est inférieure à 3 mm ;
- le ou chaque élément d'absorption a une hauteur comprise entre 2 cm et 10 cm ;
- le ou chaque élément d'absorption a une épaisseur comprise entre 1 cm et 5 cm ;
- le ou chaque élément d'absorption forme un contour fermé autour de l'ouverture traversante correspondante ;
- le dispositif de ventilation comprend un silencieux disposé entre le conduit et le système de génération du flux d'air ;
- le silencieux comprend une couche poreuse et/ou un déflecteur sonore ;
- la ou chaque ouverture traversante a une largeur comprise entre 0,5 cm et 10 cm, de préférence entre 2 cm et 6 cm dans une direction transversale orthogonale à la direction longitudinale ;
- l'élément d'absorption est constitué par un bloc de matériau absorbant ;
- le matériau absorbant est choisi parmi les matériaux suivants : tissu, polyester, matériaux à cellules fermées et notamment mousse à cellules fermées ; et
- la ou chaque ouverture traversante est constituée par une fente allongée suivant la direction longitudinale.

L'invention a également pour objet un véhicule ferroviaire comportant un dispositif de ventilation tel que décrit ci-dessus.

D'autres caractéristiques et avantages de l'invention apparaîtront à la lecture de la description qui va suivre, donnée uniquement à titre d'exemple et faite en se référant aux dessins annexés, dans lesquels :
[Fig 1] la figure 1 est une vue schématique de côté d'un véhicule ferroviaire selon l'invention ;
[Fig 2] la figure 2 est une vue schématique de dessus du véhicule ferroviaire de la figure 1 ; et
[Fig 3] la figure 3 est une vue schématique en coupe suivant un plan III-III' visible à la figure 1 du véhicule ferroviaire de la figure 1.

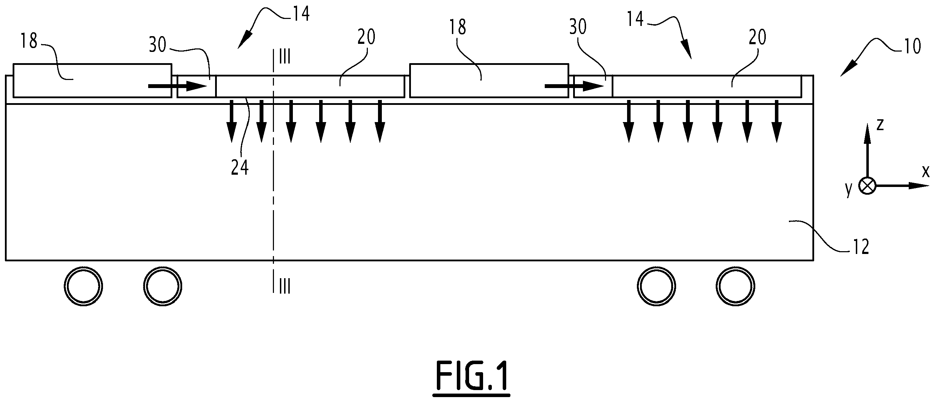

Dans la suite, les termes d'orientation s'entendent en référence au repère d'orientation usuel des véhicules ferroviaires, représenté sur les figures 1 à 3, et dans lequel on distingue :
- un axe longitudinal X, orienté de l'arrière vers l'avant, selon le sens de marche du véhicule ferroviaire,
- un axe transversal Y, perpendiculaire à l'axe longitudinal, orienté de la droite vers la gauche et formant avec l'axe X un plan longitudinal, qui est sensiblement horizontal lorsque la voiture est disposée sur des rails s'étendant horizontalement, et
- un axe d'élévation Z, perpendiculaire au plan longitudinal, orienté du bas vers le haut.

La figure 1 illustre un véhicule ferroviaire 10 selon l'invention. Le véhicule ferroviaire 10 comprend au moins un compartiment voyageur 12 configuré pour recevoir des passagers, et au moins un, ici deux, dispositifs de ventilation 14 montés au-dessus du compartiment voyageur 12.

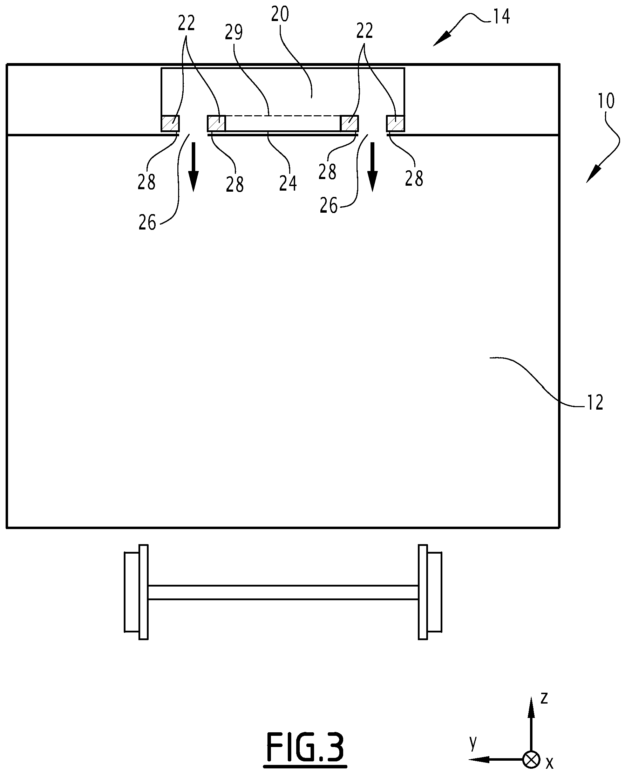

Chaque dispositif de ventilation 14 comporte un système CVC (chauffage, ventilation et climatisation) 18 pour produire un flux d'air, au moins un conduit 20 destiné à recevoir le flux d'air produit par le système CVC 18 et à la distribuer dans le compartiment voyageur 12, et au moins un élément d'absorption acoustique 22 (visible sur la figure 3) disposé dans le conduit 20.

Le système CVC 18 est propre à permettre l'échange d'air entre l'extérieur et l'intérieur du véhicule ferroviaire 10, par exemple en aspirant l'air de l'extérieur du véhicule ferroviaire 10 et en le refoulant vers l'intérieur du véhicule ferroviaire 10. Optionnellement, le système CVC 18 est également apte à chauffer ou refroidir l'air ainsi échangé.

Le conduit 20 est allongé selon la direction longitudinale X.

En référence à la Figure 3, le conduit 20 comprend une paroi de séparation 24 qui sépare l'intérieur du conduit 20 du compartiment voyageur 12. La paroi de séparation 24 s'étend sensiblement parallèlement à la direction longitudinale X. En particulier, la paroi de séparation 24 est sensiblement parallèle au plan longitudinal.

La paroi de séparation 24 présente des propriétés acoustiques réfléchissantes. Elle est constituée par exemple d'un laminé haute pression (mieux connu sous l'acronyme HPL, venant de l'anglais « High Pressure Laminate »), ou d'un matériau composite, ou d'aluminium.

La paroi de séparation 24 présente au moins une ouverture traversante 26 et de préférence, comme représenté ici, au moins deux ouvertures traversantes 26.

Chaque ouverture traversante 26 est adaptée pour le passage du flux d'air provenant du système CVC de sorte que celui-ci circule à travers l'ouverture traversante 26, de l'intérieur du conduit 20 vers le compartiment voyageur 12.

Chaque ouverture traversante 26 est constituée par une fente allongée suivant la direction longitudinale X. De préférence, chaque ouverture traversante 26 s'étend sur sensiblement toute la longueur du conduit 20.

Chaque ouverture traversante 26 a une largeur comprise entre 0,5 cm et 10 cm dans la direction transversale Y, de préférence entre 2 cm et 6 cm.

Chaque ouverture traversante 26 est bordée par un bord 28.

Toujours en référence à la Figure 3, un élément d'absorption acoustique 22 est disposé à la périphérie de chaque ouverture traversante 26. L'élément d'absorption 22 est en particulier fixé à la périphérie de l'ouverture traversante 26, par exemple par collage ou par l'intermédiaire d'un élément de fixation métallique ou plastique.

Avantageusement, cet élément d'absorption 22 forme un contour fermé autour de ladite ouverture traversante 26. En variante, l'élément d'absorption 22 forme un contour qui entoure partiellement l'ouverture traversante 26.

La distance transversale maximale entre l'élément d'absorption 22 et le bord 28 de l'ouverture traversante 26 est inférieure à 3 mm. Avantageusement, l'élément d'absorption 22 affleure le bord 28 de l'ouverture traversante 26.

L'élément d'absorption 22 a une hauteur comprise entre 2 cm et 10 cm, ladite hauteur étant mesurée suivant la direction d'élévation Z.

L'élément d'absorption 22 a par ailleurs une épaisseur comprise entre 1 cm et 5 cm, ladite épaisseur étant mesurée suivant la direction transversale Y.

L'élément d'absorption 22 est constitué par un bloc de matériau absorbant. L'élément d'absorption 22 est par exemple réalisé par un des matériaux suivants : tissu, polyester, matériaux à cellules fermées et notamment mousse à cellules fermées.

Avantageusement, l'élément d'absorption 22 est traité anti-feu, antibactérien, et/ou anti-humidité.

Avantageusement, l'élément d'absorption 22 présente une durée de vie supérieure à 30 ans.

Avantageusement, le conduit 20 comprend également une paroi de doublage 29 (figure 3) disposée dans le conduit 20 et allongée parallèlement à la paroi de séparation 24. Cette paroi de doublage 29 est configurée pour conférer au conduit 20 un régime d'écoulement d'air similaire à celui rencontré dans des conduits sans élément d'absorption 22. A cet effet, la paroi de doublage 29 est disposée entre deux ouvertures traversantes 26 en s'étendant transversalement depuis un élément d'absorption 22 bordant une première desdites ouvertures traversantes 26 jusqu'à un élément d'absorption 22 bordant la deuxième ouverture traversante 26, et longitudinalement sur toute la longueur du conduit 20. De plus, la paroi de doublage 29 affleure sensiblement la surface supérieure de ces éléments d'absorption 22.

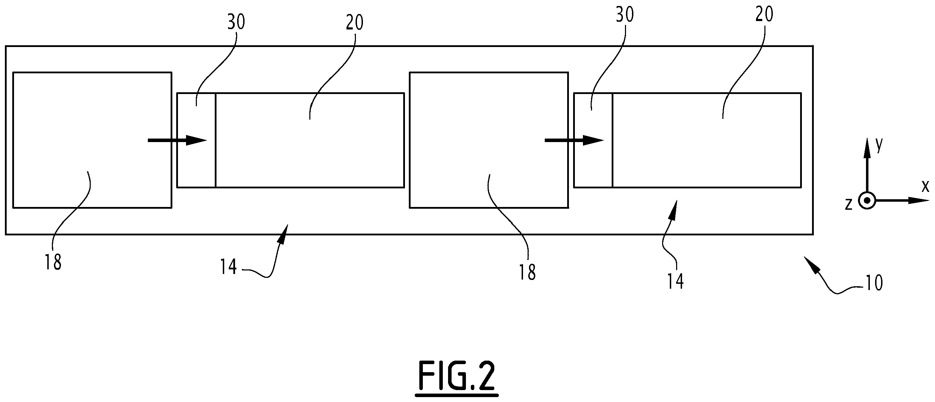

De retour à la Figure 2, le dispositif de ventilation 14 comporte également, dans l'exemple représenté, un silencieux 30.

Ce silencieux 30 est configuré pour atténuer le bruit venant du système CVC 18 avant sa propagation vers le conduit 20.

A cet effet, le silencieux 30 est disposé entre le conduit 20 et le système 18 de génération du flux d'air. Il comprend une couche poreuse et/ou un déflecteur sonore.

En variante (non représentée), le dispositif de ventilation 14 ne comporte pas de silencieux 30, le conduit 20 étant alors raccordé directement à la sortie du système CVC 18.

Grâce à l'invention décrite ci-dessus, le niveau du bruit en provenance du système CVC 18 et diffusé vers l'intérieur de véhicule ferroviaire 10 est sensiblement réduit, même en l'absence de silencieux. Le coût de fabrication du dispositif de ventilation 14 en est significativement réduit.

## Revendications

1. Dispositif de ventilation (14) pour véhicule (10), notamment ferroviaire, comportant un système (18) de génération d'un flux d'air et au moins un conduit (20) destiné à recevoir le flux d'air, le conduit (20) étant allongé selon une direction longitudinale d'extension et comprenant une paroi de séparation (24), sensiblement parallèle à la direction longitudinale, pour séparer l'intérieur du conduit (20) d'un compartiment voyageur (12) du véhicule (10), ladite paroi de séparation (24) présentant au moins deux ouvertures traversantes (26),
le dispositif de ventilation (14) pour véhicule (10) comportant également au moins un élément d'absorption acoustique (22) disposé à la périphérie des ouvertures traversantes (26),
le dispositif de ventilation (14) étant **caractérisé en ce que** le conduit (20) comprend une paroi de doublage (29) disposée entre les deux ouvertures traversantes (26) et s'étendant transversalement depuis un élément d'absorption acoustique (22) bordant une desdites ouvertures traversantes (26) jusqu'à un élément d'absorption acoustique (22) bordant la deuxième ouverture traversante (26), et longitudinalement sur toute la longueur du conduit (20).

2. Dispositif de ventilation (14) selon la revendication 1, dans lequel la distance maximale entre le ou chaque élément d'absorption (22) et un bord (28) de l'ouverture traversante (26) correspondante est inférieure à 3 mm.

3. Dispositif de ventilation (14) selon l'une quelconque des revendications précédentes, dans lequel le ou chaque élément d'absorption (22) a une hauteur comprise entre 2 cm et 10 cm.

4. Dispositif de ventilation (14) selon l'une quelconque des revendications précédentes, dans lequel le ou chaque élément d'absorption (22) a une épaisseur comprise entre 1 cm et 5 cm.

5. Dispositif de ventilation (14) selon l'une quelconque des revendications précédentes, dans lequel le ou chaque élément d'absorption (22) forme un contour fermé autour de l'ouverture traversante (26) correspondante.

6. Dispositif de ventilation (14) selon l'une quelconque des revendications précédentes, comprenant un silencieux (30) disposé entre le conduit (20) et le système (18) de génération du flux d'air.

7. Dispositif de ventilation (14) selon la revendication 6, dans lequel le silencieux (30) comprend une couche poreuse et/ou un déflecteur sonore.

8. Dispositif de ventilation (14) selon l'une quelconque des revendications précédentes, dans lequel la ou chaque ouverture traversante (26) a une largeur comprise entre 0,5 cm et 10 cm, de préférence entre 2 cm et 6 cm dans une direction transversale orthogonale à la direction longitudinale.

9. Dispositif de ventilation (14) selon l'une quelconque des revendications précédentes, dans lequel l'élément d'absorption (22) est constitué par un bloc de matériau absorbant.

10. Dispositif de ventilation (14) selon la revendication 9, dans lequel le matériau absorbant est choisi parmi les matériaux suivants : tissu, polyester, matériaux à cellules fermées et notamment mousse à cellules fermées.

11. Dispositif de ventilation (14) selon l'une quelconque des revendications précédentes, dans lequel la ou chaque ouverture traversante (26) est constituée par une fente allongée suivant la direction longitudinale.

12. Véhicule (10), notamment ferroviaire, comprenant au moins un dispositif de ventilation (14) selon l'une quelconque des revendications précédentes.

## Patentansprüche

1. Lüftungsvorrichtung (14) für ein Fahrzeug (10), insbesondere ein Schienenfahrzeug, die ein System (18) zur Erzeugung eines Luftstroms und mindestens einen Kanal (20) aufweist, der zur Aufnahme des Luftstroms bestimmt ist, wobei der Kanal (20) in einer Längsausdehnungsrichtung langgestreckt ist und eine im Wesentlichen parallel zur Längsrichtung verlaufende Trennwand (24) aufweist, um das Innere des Kanals (20) von einem Fahrgastraum (12) des Fahrzeugs (10) zu trennen, wobei die Trennwand (24) mindestens zwei Durchgangsöffnungen (26) aufweist,
wobei die Lüftungsvorrichtung (14) für ein Fahrzeug (10) auch mindestens ein schallabsorbierendes Element (22) aufweist, das am Umfang der Durchgangsöffnungen (26) angeordnet ist,
wobei die Lüftungsvorrichtung (14) **dadurch gekennzeichnet ist, dass** der Kanal (20) eine Auskleidungswand (29) aufweist, die zwischen den beiden Durchgangsöffnungen (26) angeordnet ist und sich quer von einem schallabsorbierenden Element (22), das an eine der Durchgangsöffnungen (26) angrenzt, zu einem schallabsorbierenden Element (22), das an die zweite Durchgangsöffnung (26) angrenzt, und in Längsrichtung über die gesamte Länge des Kanals (20) erstreckt.

2. Lüftungsvorrichtung (14) nach Anspruch 1, bei der der maximale Abstand zwischen dem oder jedem Absorptionselement (22) und einem Rand (28) der entsprechenden Durchgangsöffnung (26) weniger als 3 mm beträgt.

3. Lüftungsvorrichtung (14) nach einem beliebigen der vorhergehenden Ansprüche, bei der das oder jedes Absorptionselement (22) eine Höhe zwischen 2 cm und 10 cm aufweist.

4. Lüftungsvorrichtung (14) nach einem beliebigen der vorhergehenden Ansprüche, wobei das oder jedes Absorptionselement (22) eine Dicke zwischen 1 cm und 5 cm aufweist.

5. Lüftungsvorrichtung (14) nach einem beliebigen der vorhergehenden Ansprüche, bei das der oder jedes Absorptionselement (22) eine geschlossene Kontur um die entsprechende Durchgangsöffnung (26) bildet.

6. Lüftungsvorrichtung (14) nach einem beliebigen der vorhergehenden Ansprüche, mit einem Schalldämpfer (30), der zwischen dem Kanal (20) und dem System (18) zur Erzeugung des Luftstroms angeordnet ist.

7. Lüftungsvorrichtung (14) nach Anspruch 6, bei der der Schalldämpfer (30) eine poröse Schicht und/oder einen Schallabweiser umfasst.

8. Lüftungsvorrichtung (14) nach einem beliebigen der vorhergehenden Ansprüche, bei der die oder jede Durchgangsöffnung (26) in einer Querrichtung orthogonal zur Längsrichtung eine Breite zwischen 0,5 cm und 10 cm, vorzugsweise zwischen 2 cm und 6 cm aufweist.

9. Lüftungsvorrichtung (14) nach einem beliebigen der vorhergehenden Ansprüche, bei der das Absorptionselement (22) durch einen Block aus absorbierendem Material gebildet ist.

10. Lüftungsvorrichtung (14) nach Anspruch 9, bei der das absorbierende Material aus den folgenden Materialien ausgewählt ist: Gewebe, Polyester, geschlossenzellige Materialien und insbesondere geschlossenzelliger Schaum.

11. Lüftungsvorrichtung (14) nach einem beliebigen der vorhergehenden Ansprüche, bei der die oder jede Durchgangsöffnung (26) durch einen in Längsrichtung verlaufenden Längsschlitz gebildet ist.

12. Fahrzeug (10), insbesondere Schienenfahrzeug, mit mindestens einer Lüftungsvorrichtung (14) nach einem beliebigen der vorhergehenden Ansprüche.

## Claims

1. A ventilation device (14) for a vehicle (10), in particular a railway vehicle, including a system (18) for generating an air flow and at least one duct (20) intended to receive the air flow, the duct (20) being elongated in a longitudinal extension direction and comprising a separating wall (24), substantially parallel to the longitudinal direction, in order to separate the inside of the duct (20) from a traveler compartment (12) of the vehicle (10), said separating wall (24) having at least two through openings (26),
the ventilation device (14) for a vehicle (10) also including at least one acoustic absorption element (22) positioned at the periphery of the through openings (26),
the ventilation device (14) being **characterized in that** the duct (20) comprises a lining wall (29) positioned between the two through openings (26) and extending transversely from an acoustic absorption element (22) bordering one of said through openings (26) to an acoustic absorption element (22) bordering the second through opening (26), and longitudinally over the entire length of the duct (20).

2. The ventilation device (14) according to claim 1, wherein the maximum distance between the or each absorption element (22) and an edge (28) of the corresponding through opening (26) is less than 3 mm.

3. The ventilation device (14) according to any one of the preceding claims, wherein the or each absorption element (22) has a height between 2 cm and 10 cm.

4. The ventilation device (14) according to any one of the preceding claims, wherein the or each absorption element (22) has a thickness between 1 cm and 5 cm.

5. The ventilation device (14) according to any one of the preceding claims, wherein the or each absorption element (22) forms a closed contour around the corresponding through opening (26).

6. The ventilation device (14) according to any one of the preceding claims, comprising a silencer (30) positioned between the duct (20) and the system (18) for generating the air flow.

7. The ventilation device (14) according to claim 6, wherein the silencer (30) comprises a porous layer and/or a sound deflector.

8. The ventilation device (14) according to any one of the preceding claims, wherein the or each through opening (26) has a width between 0.5 cm and 10 cm, preferably between 2 cm and 6 cm in a transverse direction orthogonal to the longitudinal direction.

9. The ventilation device (14) according to any one of the preceding claims, wherein the absorption element (22) is made up of a block of absorbent material.

10. The ventilation device (14) according to claim 9, wherein the absorbent material is chosen among the following materials: fabric, polyester, closed-cell materials, and in particular closed-cell foam.

11. The ventilation device (14) according to any one of the preceding claims, wherein the or each through opening (26) is made up of a slit elongated in the longitudinal direction.

12. A vehicle (10), in particular a rail vehicle, comprising at least one ventilation device (14) according to any one of the preceding claims.
